# EUROPÄISCHE PATENTSCHRIFT

(11) **EP 1 319 861 B1**
(45) Veröffentlichungstag und Bekanntmachung des Hinweises auf die Patenterteilung: **12.03.2008**
(21) Anmeldenummer: 02027106.0
(22) Anmeldetag: 04.12.2002
(51) Int. Cl.: F16F 1/38

(54) **Lagerung mit einem Gummi-Metalllager für einen Getriebeträger**
Support with a metal-rubber bearing for the support of a gearbox
Support comportant un palier métal-caoutchouc pour un support de boite de vitesse

(30) Priorität: 12.12.2001 DE 10160840
(43) Veröffentlichungstag der Anmeldung: 18.06.2003
(73) Patentinhaber: Dr.Ing. h.c. F. Porsche Aktiengesellschaft, 70435 Stuttgart (DE)
(72) Erfinder: Hawener, Rainer, 75233 Tiefenbronn (DE); Albers, Felix, 71292 Friolzheim (DE)

(56) Entgegenhaltungen:
- DE-A- 4 240 188
- US-A- 1 940 302
- US-A- 4 286 827
- PATENT ABSTRACTS OF JAPAN vol. 2000, no. 25, 12. April 2001 (2001-04-12) & JP 2001 221286 A (TOYODA GOSEI CO LTD), 17. August 2001 (2001-08-17)

## Beschreibung

Die Erfindung bezieht sich auf eine Lagerung mit einem Gummi-Metalllager nach dem Oberbegriff des Patentanspruchs 1.

Aus der DE 19 950 731 C1 ist ein Lager in einem Maschinenteil unter Zwischenschaltung eines am Lageraußenring gehaltenen Ringes sowie eines darauf angeordneten Elastomermaterials, das sich in Ausnehmungen des Ringes sowie des Maschinenteils hineinpreßt, bekannt.

Aufgabe der Erfindung ist es, einen einfach herzustellenden Lagersitz für ein Gummi-Metalllager, insbesondere in einem Getriebequerträger zu schaffen, welcher das Gummi-Metalllager dauerhaft fest aufnimmt und einer Lose in Folge von Werkstoff-Setzerscheinungen und hohen Temperaturen entgegenwirkt.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, daß das Gummi-Metalllager im Lagersitz des Trägers mit einem Festsitz gehalten wird, der im wesentlichen aus einer im Lagersitz eingesetzten Lagerhülse sowie einer mit dieser unter Formschluß gehaltenen Außenhülse des Lagers zusammenwirkt. Das Gummi-Metallager weist eine am Gummikörper festhaftende Außenhülse aus einem elastischen Material auf und diese ist in der mit scharfkantigen Aussparungen versehenen ortsfesten metallischen Lagerhülse angeordnet. Die Außenhülse ist eingekrallt in den Aussparungen der Lagerhülse vorgesehen.

Hierdurch wird in vorteilhafter Weise eine innige Verbindung zwischen der ortsfesten Lagerhülse und der Außenhülse des Lagers erzielt, so daß zur Lageveränderung des Lagers im Lagersitz hohe Auspreßkräfte erforderlich sind.

Damit ein Formschluß zwischen der Lagerhülse und der Außenhülse erzielt werden kann, ist die Außenhülse des Gummi-Metallagers mit einem größeren Außendurchmesser als der Innendurchmesser der Lagerhülse ausgeführt. Die große radiale Vorspannung der Außenhülse bewirkt partielle Wölbungen in den Aussparungen der Lagerhülse. Durch diese Maßnahme wird eine sogenannte Verkrallung erzielt, bei der sich Material des elastischen Werkstoffs der Außenhülse des Lagers teilweise in die Aussparungen der Lagerhülse hineindrückt, so daß ein optimales Festsetzen in Längs- und Querrichtung bewirkt wird.

Beispielsweise bestehen die Aussparungen aus Bohrungen etwa gleichen Durchmessers, die zueinander beabstandet sind und jeweils vier Bohrungen die Ecken eines Quadrats bilden und welche über die Umfangsfläche der Lagerhülse etwa gleichmäßig verteilt sind, wobei zwischen diesen vier Bohrungen weitere Bohrungen vorhanden sein können.

Die Aussparungen können auch eine andere geometrische Form, wie polygonal bzw. rechteckig, viereckig oder achteckig ausgebildet sein. Die Aussparungen sind derart in der Lagerhülse angeordnet, daß zwischen der Lagerhülse und der Außenhülse ein Formschluß in Längs- und Querrichtung des Lagers erzielt werden kann.

Zur Erzielung einer optimalen Wirkung der Lageraufnahme ist eine Abstimmung des Werkstoffs für die elastische Außenhülse, das heißt, deren Elastizität und Duktilität maßgebend. Desweiteren ist die Wandstärke der Außenhülse sowie die maßliche Überdeckung zur Lageraufnahme (Preßpassung) wichtig. Außerdem gewährleistet die Größe der Aussparungen in der metallischen Lagerhülse das Maß für die Einkrallung. Hierdurch wird erreicht, daß die elastische Außenhülse ausreichend tief in die Aussparungen kriechen kann, wobei die Außenhülse nicht in den Aussparungen auch unter Betriebs- und Temperaturbelastung ausknickt, wobei auch die Außenhülse nicht beim Einpreßvorgang knickt oder bricht.

Ein Ausführungsbeispiel der Erfindung ist in den Zeichnungen dargestellt und wird im folgenden näher beschrieben.

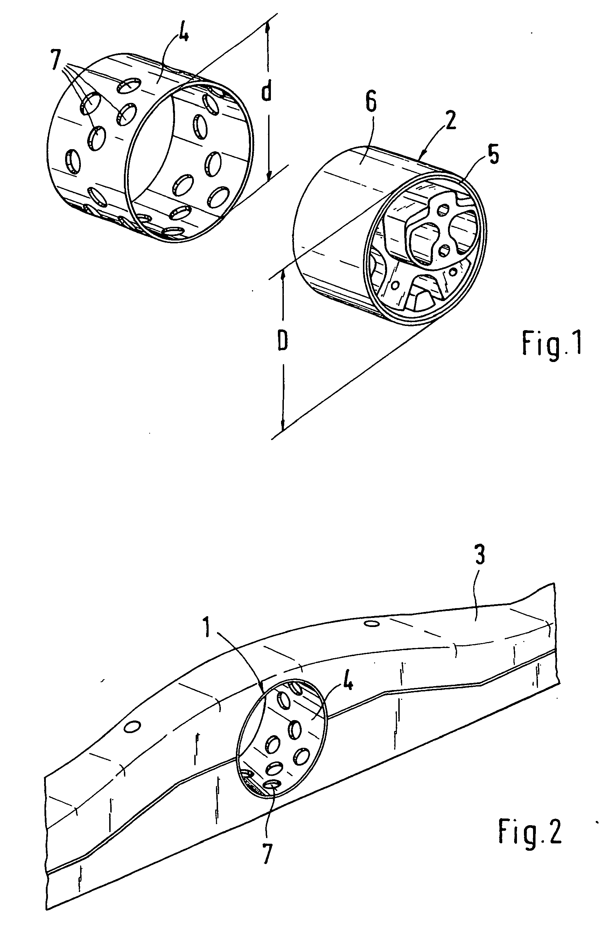

Es zeigen
- Fig. 1: eine schaubildliche Darstellung der mit Aussparungen versehenen Lagerhülse sowie ein einsetzbares Gummi- Metallager,
- Fig. 2: eine schaubildliche Darstellung der fest im Träger eingesetzten Lagerhülse,
- Fig. 3: einen vergrößerten Vertikalschnitt durch das in die Lagerhülse eingesetzte Gummi- Metallager und
- Fig. 4: eine vergrößerte Darstellung im Bereich der Aussparungen.

Eine Lagerung 1 für ein Gummi- Metallager 2, beispielsweise in einem Getriebeträger 3, umfaßt im wesentlichen eine in die Lageraufnahme 1 eingesetzte Lagerhülse 4, in der das Lager 2 gehalten wird, welches am Gummikörper eine elastische Außenhülse 6 aufweist. Die Lagerhülse 4 ist fest verschweißt im Träger 3 gehalten und mit mehreren Aussparungen 7 versehen.

Die Lagerhülse 4 besteht vorzugsweise aus Metall und die eingebrachten Aussparungen 7 sind scharfkantig ausgeführt. Die Außenhülse 6 des Lagers 2 besteht aus einem Kunststoff oder einem anderen gleichwirkenden Material und ist festhaftend mit dem Gummikörper 5 verbunden, vorzugsweise ist die Außenhülse 6 auf dem Gummikörper 5 anvulkanisiert.

Die Außenhülse 6 weist eine maßliche Überdeckung gegenüber der Lagerhülse 4 auf, das heißt, der Außendurchmesser D der Außenhülse 6 ist größer als der Innendurchmesser d der Lagerhülse 4, dieses Maß beträgt beispielsweise 2 mm.

Die Aussparungen 7 bestehen bei dem gezeigten Ausführungsbeispiel aus Bohrungen, wobei jeweils vier Bohrungen die Ecken eines Quadrats bilden. Es sind jeweils mehrere Bohrungen dieser Anordnung über die Umfangsfläche der Lagerhülse 4 verteilt angeordnet. Zwischen diesen Bohrungen können weitere Bohrungen vorgesehen sein. Es sind auch andere geometrische Formen der Aussparungen 7 möglich.

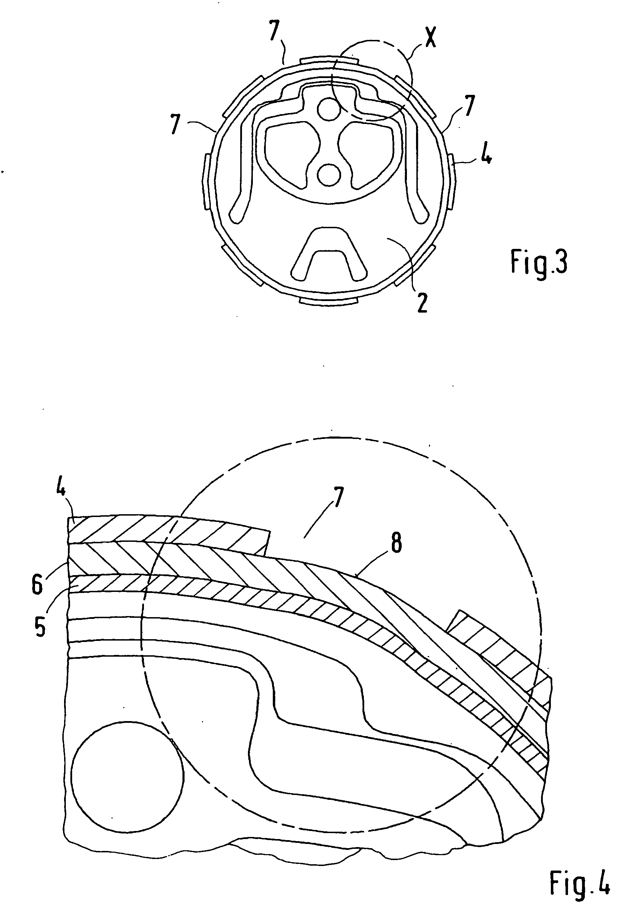

Durch das Übermaß der Außenhülse 6 mit dem Durchmesser D ist das Lager 2 in der Lagerhülse 4 eingepreßt gehalten, so daß das gegenüber der harten metallischen Lagerhülse 4 weichere Material der Außenhülse 6 partiell in die Aussparungen 7 eindringt, wie insbesondere Fig. 4 näher zeigt. In dieser vergrößerten Darstellung ist auch zu erkennen, daß das Material der Außenhülse 6 sich in die Aussparungen 7 hineinwölbt und die Wölbungen 8 hierdurch bezogen auf alle Aussparungen 7 eine sogenannte Verkrallung in der Lagerhülse 4 und somit einen Formschluß bewirken. Durch die Verkrallung 8 wird das Lager 2 in Axial- und in Umfangsrichtung gegen maximale Auspreßkräfte fest in der Lagerhülse 4 gehalten.

## Patentansprüche

1. Lagerung (1) mit einem Gummi-Metalllager (2) für einen Getriebeträger (3), welcher in einem Lagersitz eine eingesetzte Lagerhülse (4) aufweist, **dadurch gekennzeichnet, daß** das Gummi-Metallager (2) eine an einem Gummikörper (5) festhaftende Außenhülse (6) aus einem elastischen Material aufweist und diese in der mit scharfkantigen Aussparungen (7) versehenen ortsfesten metallischen Lagerhülse (4) angeordnet ist wobei die elastische Außenhülse (6) eingekrallt in den Aussparungen (7) der Lagerhülse (4) gehalten wird.

2. Lagerung nach Anspruch 1, **dadurch gekennzeichnet, daß** die Außenhülse (6) des Gummikörpers (5) mit einem größeren Außendurchmesser (D) versehen ist, als der Innendurchmesser der Lagerhülse (4) beträgt und die Außenhülse (6) jeweils mit partiellen Flächenanteilen (Wölbungen 8) in den Aussparungen (7) angeordnet ist.

3. Lagerung nach den Ansprüchen 1 oder 2, **dadurch gekennzeichnet, daß** der Außendurchmesser (D) der Außenhülse (6) etwa 2 mm größer ist als der Innendurchmesser (d) der Lagerhülse (4).

4. Lagerung nach den Ansprüchen 1, 2 oder 3, **dadurch gekennzeichnet, daß** die Aussparungen (7) aus mehreren Bohrungen etwa gleichen Durchmessers bestehen, die zueinander beabstandet sind und jeweils vier Bohrungen zusammengefaßt die Ecken eines Quadrats bilden, welche über die Umfangsfläche der Lagerhülse (4) verteilt sind, wobei zwischen diesen vier Bohrungen weitere Bohrungen vorsehbar sind.

5. Lagerung nach Anspruch 1, **dadurch gekennzeichnet, daß** die Aussparungen (7) derart in der Lagerhülse (4) angeordnet sind, daß zwischen der Lagerhülse (4) und der Außenhülse (6) ein Formschluß in Längs- und in Querrichtung des Lagers (2) erzielbar ist.

## Claims

1. A mounting (1) with a rubber / metal bearing (2) for a gearbox support (3) which has an inserted bearing sleeve (4) in a bearing seat, **characterized in that** the rubber /metal bearing (2) has an outer sleeve (6) of a resilient material adhering to a rubber body (5), and the said outer sleeve (6) is arranged in the stationary metallic bearing sleeve (4) provided with sharp-edged apertures (7), wherein the resilient outer sleeve (6) is held in a keyed-in manner in the apertures (7) in the bearing sleeve (4).

2. A mounting according to Claim 1, **characterized in that** the outer sleeve (6) of the rubber body (5) is provided with a larger external diameter (D) than the internal diameter of the bearing sleeve (4), and the outer sleeve (6) is arranged with partial surface portions (bulges 8) in the apertures (7) in each case.

3. A mounting according to Claims 1 or 2, **characterized in that** the external diameter (D) of the outer sleeve (6) is approximately 2 mm larger than the internal diameter (d) of the bearing sleeve (4).

4. A mounting according to Claims 1, 2 or 3, **characterized in that** the apertures (7) consist of a plurality of bores of substantially the same diameter which are arranged at a distance from one another, and a group of four bores forms the corners of a square in each case, which are distributed over the peripheral face of the bearing sleeve (4), wherein it is possible for further bores to be provided between the said four bores.

5. A mounting according to Claim 1, **characterized in that** the apertures (7) are arranged in the bearing sleeve (4) in such a way that between the bearing sleeve (4) and the outer sleeve (6) positive locking is capable of being achieved in the longitudinal and transverse directions of the bearing (2).

## Revendications

1. Logement (1) avec un palier métal-caoutchouc (2), pour un support de boîte de vitesse (3), présentant une douille de palier (4) disposée dans un siège de palier, **caractérisé en ce que** le palier métal-caoutchouc (2) présente une douille externe (6) en matériau élastique qui adhère fixement à un corps en caoutchouc (5) et qui est disposée dans la douille de palier fixe métallique (4) dotée d'évidements à arêtes vives (7), la douille externe élastique (6) étant maintenue agrippée dans les évidements (7) de la douille de palier (4).

2. Logement selon la revendication 1, **caractérisé en ce que** la douille externe (6) du corps en caoutchouc (5) a un diamètre extérieur (D) plus grand que le diamètre intérieur de la douille de palier (4) et **en ce que** la douille externe (6) est disposée à chaque fois avec des parties de surfaces partielles (courbures 8) dans les évidements (7).

3. Logement selon les revendications 1 ou 2, **caractérisé en ce que** le diamètre extérieur (D) de la douille externe (6) est supérieur d'environ 2 mm au diamètre intérieur (d) de la douille de palier (4).

4. Logement selon les revendications 1, 2 ou 3, **caractérisé en ce que** les évidements (7) sont constitués par plusieurs perçages de diamètre sensiblement égal et espacés les uns des autres, quatre perçages pris ensemble formant à chaque fois les coins d'un carré, qui sont répartis sur la surface périphérique de la douille de palier (4), d'autres perçages pouvant être prévus entre ces quatre perçages.

5. Logement selon la revendication 1, **caractérisé en ce que** les évidements (7) sont disposés dans la douille de palier (4) de façon à pouvoir réaliser entre la douille de palier (4) et la douille externe (6) une liaison mécanique dans le sens longitudinal et dans le sens transversal du palier (2).
